# EUROPÄISCHE PATENTSCHRIFT

(11) **EP 4 575 442 B1**
(45) Veröffentlichungstag und Bekanntmachung des Hinweises auf die Patenterteilung: **01.07.2026**
(21) Anmeldenummer: 24213961.6
(22) Anmeldetag: 19.11.2024
(51) Int. Cl.: G01L 19/06

(54) **DRUCKMESSAUFNEHMER ZUR BESTIMMUNG UND/ODER ÜBERWACHUNG EINES DRUCKES EINES MEDIUMS**
PRESSURE TRANSDUCER FOR DETERMINING AND/OR MONITORING A PRESSURE OF A MEDIUM
CAPTEUR DE PRESSION POUR DÉTERMINER ET/OU SURVEILLER UNE PRESSION D'UN MILIEU

(30) Priorität: 18.12.2023 DE 102023135582
(43) Veröffentlichungstag der Anmeldung: 25.06.2025
(73) Patentinhaber: Endress+Hauser SE+Co. KG, 79689 Maulburg (DE)
(72) Erfinder: Kober, Timo, 14482 Potsdam (DE); Leuthner, Dietmar, 79576 Weil am Rhein (DE); Mack, Benjamin, 79539 Lörrach (DE); Neuhaus, Joachim, 79585 Steinen (DE); Schneider, Franz, 79688 Hausen im Wiesental (DE); Szymanski, Sylwester, 79650 Schopfheim (DE); Wiemer, Jan Lukas, 79541 Lörrach (DE)
(74) Vertreter: Endress + Hauser Group Services (Deutschland) AG+Co. KG

(56) Entgegenhaltungen:
- EP-B1- 3 314 228
- DE-A1- 102016 015 447

## Beschreibung

Die Erfindung bezieht sich auf einen Druckmessaufnehmer zur Bestimmung und/oder Überwachung eines Druckes eines Mediums.

In der Druckmesstechnik sind Absolutdruck-, Differenzdruck- und Relativdruckmessaufnehmer bekannt. Absolutdruckmessaufnehmer bestimmen den vorherrschenden Druck absolut, d. h. in Bezug auf Vakuum, während Differenzdruckmessaufnehmer die Differenz zwischen zwei unterschiedlichen Drücken bestimmen. Bei Relativdruckmessaufnehmern wird der zu messende Druck gegenüber einem Referenzdruck bestimmt, wobei der in der Umgebung des Relativdruckmessaufnehmers vorherrschende Atmosphärendruck als Referenzdruck dient. Eine Vielzahl solcher Absolutdruck-, Differenzdruck- und Relativdruckmessaufnehmer wird von Firmen der Endress + Hauser-Gruppe hergestellt und vertrieben.

Druckmessaufnehmer dienen zur Messung des Drucks und/oder zur Steuerung, Regelung und/oder Automatisierung eines in der Anlage ablaufenden Prozesses. Druckmessgeräte werden in der Automatisierungstechnik in einer Vielzahl von Industriezweigen eingesetzt, z.B. in der Chemie und in der Lebensmittelindustrie, um nur einige wichtige Anwendungsgebiete zu nennen. Differenzdruckmessgeräte dienen insbesondere zur kontinuierlichen Messung von Druckdifferenzen in Messmedien, z.B. in Flüssigkeiten, Dämpfen und Gasen. Aus dem Differenzdruck kann beispielsweise der Füllstand eines Füllguts in einem Behälter oder der Durchfluss eines Messmediums durch eine Rohrleitung ermittelt werden.

Druck- und Differenzdruckmessaufnehmer weisen ein drucksensitives Element, einen sogenannten Drucksensor, auf, welcher auf zwei gegenüberliegenden Flächen mit jeweils einem ersten Druck und einem zweiten Druck beaufschlagt ist. Der Druck des Mediums steht dabei in der Regel nicht in direktem Kontakt mit dem Drucksensor, sondern wird im Falle des Druckmessaufnehmer mittels einer und im Falle des Differenzdruckmessaufnehmers mittels zweier dem Prozess zugewandter, druckempfindlicher Trennmembran(en) aufgenommen. Die jeweilige Trennmembran weist ein ihr zugeordnetes Trennmembranbett auf, welches zum Prägen der Trennmembran und zur Begrenzung des Verschiebens der Trennmembran im Überlastfall dient. Häufig wird zusätzlich eine Druckmittlerflüssigkeit eingesetzt, welche den auf die Trennmembran wirkenden Druck des Mediums über einen Druckübertragungspfad an eine der beiden Flächen des Drucksensors weiterleitet.

Bei Bruch oder Beschädigung der Trennmembran kann das Medium somit in den Druck- bzw. Differenzdruckmessaufnehmer eindringen und diesen verunreinigen und/oder sogar beschädigen. Um dies zu verhindern, ist es im Stand der Technik üblich, ein Trennmembransystem aus zwei parallel zueinander angeordneten Trennmembranen einzusetzen, von denen eine Trennmembran dem Medium zugewandt und die andere Trennmembran der Druckmittelflüssigkeit zugewandt ist. Zwischen den beiden Trennmembranen ist ein Zwischenraum vorgesehen, in dem ein Vakuum herrscht.. Für derartige Trennmembransysteme aus zwei parallel zueinander angeordneten Trennmembranen ist es im Stand der Technik üblich so genannte Sinus-Trennmembranen zu verwenden. Sinus-Trennmembranen weisen ein konzentrisches Prägebild, welches im Querschnitt einer Sinuswelle gleicht, auf.

Nachteilig hieran ist, dass es bei der Verwendung von zwei Sinus-Trennmembranen für ein Trennmembransystem vorkommen kann, dass sich im Fehlerfall (Beschädigung oder Bruch) die beiden Trennmembranen nicht voneinander lösen, da diese aufgrund ihrer sinusförmigen Ausgestaltung und der parallel zueinander angeordneten Geometrie aneinander "kleben".

Ferner ist es nachteilig, dass zur Evakuierung des Zwischenraums weitere Maßnahmen erforderlich sind. Beispielsweise kann ein zwischen den beiden Trennmembranen verlaufender umlaufender Ringkanal vorgesehen sein, um Luftblasen zu evakuieren.

DE 10 2016 015447 A1 offenbart einen Druckmessaufbau mit einem Messgerät, wobei eine Druckübertragung von einer zu überwachenden Prozess-Seite über eine Anordnung zweier Membranen mit einem dazwischen angeordneten evakuierten Zwischenraum zu dem Messgerät verlässlich getrennt von der Prozess-Seite erfolgt.

Der Erfindung liegt somit die Aufgabe zugrunde, hier Abhilfe zu schaffen.

Die Aufgabe wird erfindungsgemäß gelöst durch den Druckmessaufnehmer gemäß Patentanspruch 1.

Der erfindungsgemäße Druckmessaufnehmer zur Bestimmung und/oder Überwachung eines Druckes eines Mediums, umfasst:
- ein Messwerk und ein im Messwerk angeordneten ersten Drucksensor, welcher auf einer ersten Fläche mit dem Druck des Mediums und auf einer zweiten Fläche mit einem zweiten Druck beaufschlagt ist,
- ein Trennmembransystem mit einer ersten Trennmembran und einer zweiten Trennmembran, welche derartig zueinander angeordnet sind, dass die erste Trennmembran dem Medium zugewandt und die zweite Trennmembran dem Medium abgewandt ist und ferner zwischen der ersten Trennmembran und der zweiten Trennmembran ein Zwischenraum eingeschlossen ist, welcher evakuiert ist, so dass der Zwischenraum ein Vakuum aufweist, wobei die erste und zweite Trennmembran an einem umlaufenden Rand an dem Messwerk druckdicht unter Bildung einer zwischen der zweiten Trennmembran und dem Messwerk ausgebildeten Druckkammer befestigt sind, wobei der Druck des Mediums über die erste Trennmembran und die zweite Trennmembran an die Druckkammer übertragen wird, wobei der Druck des Mediums über die Druckkammer an die erste Fläche des ersten Drucksensors übertragen wird, wobei die erste und zweite Trennmembran jeweils einen auslenkbaren, insb. voneinander unterschiedlichen, Arbeitsbereich und eine aufgeprägte Kontur aufweisen, wobei die Druckkammer mit einem Referenzvolumen befüllt ist, so dass die erste und zweite Trennmembran eine Referenzlage ausbilden, wobei die erste und zweite Trennmembran aus der Referenzlage heraus in beide Richtungen auslenkbar sind, so dass das Volumen der Druckkammer variiert werden kann und wobei die erste und zweite Trennmembran jeweils eine axisymmetrische Auslenkung, der eine nicht axisymmetrische, insb. antisymmetrische Auslenkung überlagert ist, zur Erzielung der Volumenänderung in der Druckkammer aufweisen.

Erfindungsgemäß wird der Einsatz von Trennmembranen für ein Doppelmembransystem vorgeschlagen, die jeweils zur Erzielung der Volumenänderung in der Druckkammer aufgrund des anliegenden Mediendruckes eine axisymmetrische Auslenkung, der eine nicht axisymmetrische Auslenkung überlagert ist, ausführen. Dies bietet den Vorteil, dass sich im Defektfall die beiden Trennmembranen leichter voneinander lösen als das bei zwei Sinus-Membranen der Fall ist, da jeweils die innere- und äußere Membran bestrebt ist eine eigene Biegelinie auszubilden.

Eine vorteilhafte Ausgestaltung des erfindungsgemäßen Druckmessaufnehmers sieht vor, dass die erste und die zweite Trennmembran eine unterschiedliche Dicke aufweisen.

Eine weitere vorteilhafte Ausgestaltung des erfindungsgemäßen Druckmessaufnehmers sieht vor, dass die erste und zweite Trennmembran derartig ausgebildet sind, dass der Zwischenraum ohne einen Ringspalt evakuierbar ist.

Die Erfindung wird anhand der nachfolgenden Zeichnung näher erläutert. Es zeigt:

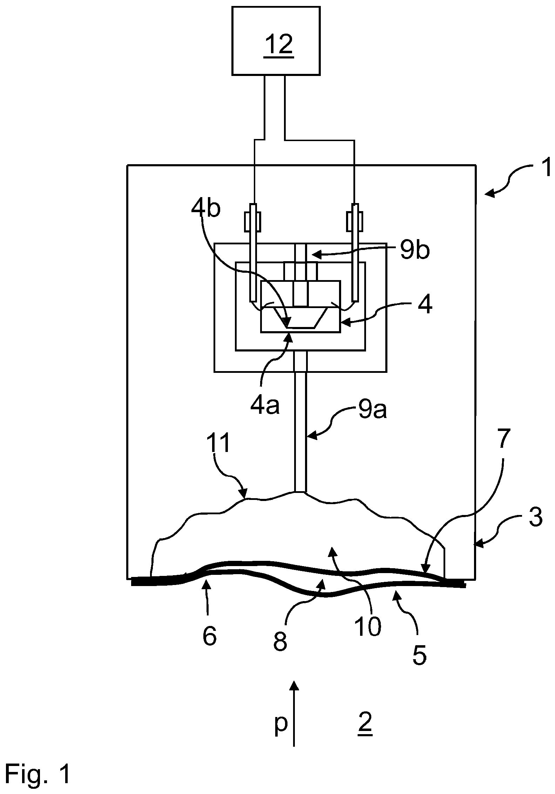

Fig. 1: eine schematische Darstellung eines erfindungsgemäßen Druckmessaufnehmers.

In Fig. 1 ist eine schematische Darstellung eines erfindungsgemäßen Druckmessaufnehmers 1 zur Bestimmung und/oder Überwachung eines Druckes eines Mediums 2 gezeigt. Ein Trennmembransystem 5 ist dem Medium 2 zugewandt angeordnet. Das Trennmembransystem 5 weist eine erste Trennmembran 6 und eine zweite Trennmembran 7 auf, die im Randbereich druckdicht mit einem Messwerk verbunden sind. Dabei ist die erste Trennmembran 6 dem Medium 2 zugewandt, wohingegen die zweite Trennmembran 7 dem Medium 2 abgewandt ist. Zwischen der ersten Trennmembran 6 und der zweiten Trennmembran 7 ist durch die druckdichte Verbindung mit dem Messwerk ein Zwischenraum 8 eingeschlossen, in welchem ein Vakuum herrscht. Im Bereich der zweiten Trennmembran 7 kann beispielsweise ein Trennmembranbett 11 im Messwerk 3 ausgebildet sein. Beide Trennmembranen 6, 7 weisen jeweils einen voneinander unterschiedlichen auslenkbaren Arbeitsbereich und eine aufgeprägte Kontur auf und sind an einem umlaufenden Rand mit dem Messwerk 3 unter Bildung einer Druckkammer 10 verbunden. Die Druckkammer 10 ist mit einem Referenzvolumen befüllt, so dass die erste und zweite Trennmembran 6, 7 eine Referenzlage ausbilden, aus der die beiden Trennmembranen 6, 7 in beide Richtungen heraus auslenkbar sind, so dass ein Volumen der Druckkammer 10 variiert werden kann. Die erste und zweite Trennmembran 6, 7 sind erfindungsgemäß derartig ausgebildet, dass sie jeweils zur Erzielung der Volumenänderung in der Druckkammer 10 eine axisymmetrische Auslenkung, der eine nicht axisymmetrische, insb. antisymmetrische Auslenkung überlagert ist, aufweisen. Insbesondere sind die erste und zweite Trennmembran 6, 7 gemäß der Lehre des Patents EP 2 300 739 B1 ausgebildet. Insbesondere wird auf die Inhalte der Absätze 25 bis 81 der Beschreibung des Patents EP 2 300 739 B1 verwiesen.

Über die Druckkammer 10 und einen ersten Druckübertragungskanal bzw. - pfad 9a wird der Druck des Mediums 2 an eine erste Fläche 4a eines in dem Messwerk 3 angeordneten Drucksensors 4 übertragen. Der Drucksensor 4 ist auf einer der ersten Fläche 4a gegenüberliegenden zweiten Fläche 4b mit einem zweiten Druck beaufschlagt. Der Druckmessaufnehmer 1 kann als Relativdruckmessaufnehmer ausgestaltet sein, welcher über einen zweiten Druckübertragungskanal bzw. -pfad 9b einen Umgebungsdruck an die zweite Fläche 4b des Drucksensor überträgt. Alternativ kann der Druckmessaufnehmer 1 als Absolutdruckmessaufnehmer ausgestaltet sein, wobei der zweite Druck dann ein Vakuum ist. Ferner kann der Druckmessaufnehmer auch als Differenzdruckmessaufnehmer ausgestaltet sein, wobei der zweite Druck dann ebenfalls über ein, vorzugsweise gleich ausgestaltetes, Trennmembransystem mit dem Medium in Druckübertragender Weise in Kontakt steht.

Das Messsignal des Drucksensors 4 kann beispielsweise an eine Auswerteeinheit 12 übertragen werden, welche dazu ausgestaltet ist, anhand des Messsignals des Drucksensors 4 den Druck p des Mediums 2 zu bestimmen.

### Bezugszeichenliste

- 1: Druckmessaufnehmer
- 2: Medium
- 3: Messwerk
- 4: Drucksensor
- 4a: erste Fläche des Drucksensors
- 4b: zweite Fläche des Drucksensors
- 5: Trennmembransystem
- 6: erste Trennmembran
- 7: zweite Trennmembran
- 8: Zwischenraum
- 9a: erster Druckübertragungspfad
- 9b: Zweiter Druckübertragungspfad
- 10: Druckkammer
- 11: Membranbett
- 12: Auswerteeinheit

## Patentansprüche

1. Druckmessaufnehmer zur Bestimmung und/oder Überwachung eines Druckes eines Mediums, aufweisend:
- ein Messwerk (3) und ein im Messwerk (3) angeordneten ersten Drucksensor (4), welcher auf einer ersten Fläche (4a) mit dem Druck des Mediums (2) und auf einer zweiten Fläche (4b) mit einem zweiten Druck beaufschlagt ist,
- ein Trennmembransystem (5) mit einer ersten Trennmembran (6) und einer zweiten Trennmembran (7), welche derartig zueinander angeordnet sind, dass die erste Trennmembran (6) dem Medium (2) zugewandt und die zweite Trennmembran (7) dem Medium (2) abgewandt ist und ferner zwischen der ersten Trennmembran (6) und der zweiten Trennmembran (7) ein Zwischenraum (8) eingeschlossen ist, welcher Zwischenraum (8) evakuiert ist, so dass der Zwischenraum (8) ein Vakuum aufweist, wobei die ersten und zweite Trennmembran (6, 7) an einem umlaufenden Rand an dem Messwerk (3) druckdicht unter Bildung einer zwischen der zweiten Trennmembran (7) und dem Messwerk (3) ausgebildeten Druckkammer (10) befestigt sind, wobei der Druck des Mediums (2) über die erste Trennmembran (6) und die zweite Trennmembran (7) an die Druckkammer (10) übertragen wird, wobei der Druck des Mediums (2) über die Druckkammer (10) an die erste Fläche (4a) des ersten Drucksensors (4) übertragen wird, wobei die erste und zweite Trennmembran (6, 7) jeweils einen auslenkbaren, insb. voneinander unterschiedlichen, Arbeitsbereich und eine aufgeprägte Kontur aufweisen, wobei die Druckkammer (10) mit einem Referenzvolumen befüllt ist, so dass die erste und zweite Trennmembran (6, 7) eine Referenzlage ausbilden, wobei die erste und zweite Trennmembran (6, 7) aus der Referenzlage heraus in beide Richtungen auslenkbar sind, so dass das Volumen der Druckkammer (10) variiert werden kann, **dadurch gekennzeichnet, dass** die erste und zweite Trennmembran (6, 7) jeweils eine axisymmetrische Auslenkung, der eine nicht axisymmetrische, insb. antisymmetrische Auslenkung überlagert ist, zur Erzielung der Volumenänderung in der Druckkammer aufweisen.

2. Druckmessaufnehmer nach Anspruch 1, wobei die erste und die zweite Trennmembran (6, 7) eine unterschiedliche Dicke aufweisen.

3. Druckmessaufnehmer nach Anspruch 1 oder 2, wobei die erste und zweite Trennmembran (6, 7) derartig ausgebildet sind, dass der Zwischenraum (8) ohne einen Ringspalt evakuierbar ist.

## Claims

1. A pressure transducer for determining and/or monitoring a pressure of a medium, with:
- A measuring mechanism (3) and a first pressure sensor (4) arranged in the measuring mechanism (3), which is impacted by the pressure of the medium (2) on a first surface (4a) and by a second pressure on a second surface (4b),
- a separating membrane system (5) with a first separating membrane (6) and a second separating membrane (7), which are arranged relative to each other in such a way that the first separating membrane (6) faces toward the medium (2) and the second separating membrane (7) faces away from the medium (2) and also in such a way that a space (8) is enclosed between the first separating membrane (6) and the second separating membrane (7), said space (8) being evacuated so that the space (8) has a vacuum, wherein the first and second separating membranes (6, 7) are attached pressure-tight to the measuring mechanism (3) at an outside edge, forming a pressure chamber (10) between the second separating membrane (7) and the measuring mechanism (3), wherein the pressure of the medium (2) is transferred to the pressure chamber (10) via the first separating membrane (6) and the second separating membrane (7), wherein the pressure of the medium (2) is transferred to the first surface (4a) of the first pressure sensor (4) via the pressure chamber (10), wherein the first and second separating membranes (6, 7) each have a working area which can be deflected, in particular one that is different from each other, and an imprinted contour, wherein the pressure chamber (10) is filled with a reference volume so that the first and second separating membranes (6, 7) form a reference position, wherein the first and second separating membranes (6, 7) can be deflected out of the reference position in both directions so that the volume of the pressure chamber (10) can be varied,
**characterized in that** the first and second separating membranes (6, 7) each have an axisymmetric deflection, which is superimposed on a non-axisymmetric, in particular antisymmetric, deflection, for the purpose of changing the volume in the pressure chamber.

2. The pressure transducer as claimed in claim 1, wherein the first and second separating membranes (6, 7) have different thicknesses.

3. The pressure transducer as claimed in claim 1 or 2, wherein the first and second separating membranes (6, 7) are configured in such a way that the space (8) can be evacuated without an annular clearance.

## Revendications

1. Capteur de pression destiné à la détermination et/ou à la surveillance d'une pression d'un produit, lequel capteur comprend :
- un système de mesure (3) et un premier capteur de pression (4) disposé dans le système de mesure (3), lequel capteur est soumis, sur une première surface (4a), à la pression du produit (2) et, sur une deuxième surface (4b), à une deuxième pression,
- un système à membranes de séparation (5) comprenant une première membrane de séparation (6) et une deuxième membrane de séparation (7), lesquelles membranes sont disposées l'une par rapport à l'autre de telle sorte que la première membrane de séparation (6) soit tournée vers le produit (2) et que la deuxième membrane de séparation (7) soit détournée du produit (2), et en outre, de telle sorte qu'un espace intermédiaire (8) soit enfermé entre la première membrane de séparation (6) et la deuxième membrane de séparation (7), lequel espace intermédiaire (8) est mis sous vide, de sorte que l'espace intermédiaire (8) présente un vide, la première et la deuxième membrane de séparation (6, 7) étant fixées de manière étanche à la pression sur un bord périphérique du système de mesure (3) en formant une chambre de pression (10) entre la deuxième membrane de séparation (7) et le système de mesure (3), la pression du produit (2) étant transmise à la chambre de pression (10) via la première membrane de séparation (6) et la deuxième membrane de séparation (7), la pression du produit (2) étant transmise à la première surface (4a) du premier capteur de pression (4) via la chambre de pression (10), la première et la deuxième membrane de séparation (6, 7) présentant chacune une zone de travail déformable, notamment différente l'une de l'autre, et un contour marqué, la chambre de pression (10) étant remplie d'un volume de référence, de sorte que la première et la deuxième membrane de séparation (6, 7) forment une position de référence, la première et la deuxième membrane de séparation (6, 7) pouvant être déviées dans les deux sens à partir de la position de référence, de sorte que le volume de la chambre de pression (10) peut être modifié,
**caractérisé en ce que** la première et la deuxième membrane de séparation (6, 7) présentent chacune une déformation axisymétrique à laquelle se superpose une déformation non axisymétrique, notamment antisymétrique, afin d'obtenir la variation de volume dans la chambre de pression.

2. Capteur de pression selon la revendication 1, pour lequel la première et la deuxième membrane de séparation (6, 7) présentent des épaisseurs différentes.

3. Capteur de pression selon la revendication 1 ou 2, pour lequel la première et la deuxième membrane de séparation (6, 7) sont conçues de telle sorte que l'espace intermédiaire (8) puisse être mis sous vide sans laisser d'espace annulaire.
